# EUROPÄISCHE PATENTSCHRIFT

(11) **EP 4 005 955 B1**
(45) Veröffentlichungstag und Bekanntmachung des Hinweises auf die Patenterteilung: **07.08.2024**
(21) Anmeldenummer: 21000302.6
(22) Anmeldetag: 26.10.2021
(51) Int. Cl.: B65G 57/30, B65G 25/02, B65G 25/04, B65G 43/08, B65G 47/53, B65G 47/82, B65G 47/88, G01B 21/02

(54) **MASCHINE ZUM SORTIEREN UND STAPELN VON STEIGEN MIT KLAPPBAREN SEITENWÄNDEN**
MACHINE FOR SORTING AND STACKING BOXES WITH TILTABLE SIDE PANELS
MACHINE POUR TRIER ET EMPILER LES CAGETTES AVEC PANNEAUX LATÉRAUX RABATTABLES

(30) Priorität: 26.11.2020 IT 202000028529
(43) Veröffentlichungstag der Anmeldung: 01.06.2022
(73) Patentinhaber: Tanzer Maschinenbau Srl, 39011 Lana (BZ) (IT)
(72) Erfinder: Ungerer, Thomas, I-39011 Lana (BZ) (IT); Tanzer, Peter, I-39011 Lana (BZ) (IT)
(74) Vertreter: Oberosler, Ludwig

(56) Entgegenhaltungen:
- EP-A1- 3 385 197
- DE-A1- 102019 113 105
- JP-A- H0 565 131
- US-A- 2 602 554

## Beschreibung

Die Erfindung bezieht sich auf eine Maschine zum Sortieren und Stapeln von Steigen mit klappbaren Seitenwänden welche mit Stapel von Steigen unterschiedlicher Modelle und einer niedrigeren Stapelhöhe als der Palettierhöhe beschickt werden, welche üblicherweise von Trockenzentrifugen oder Sortiermaschinen herangeführt werden, ohne die Beschickung mit einzelnen Steigen oder mit Stapel welche von einer niedrigeren Anzahl von Steigen gebildet sind auszuschließen.

Es sind Maschinen zum Sortieren und Stapeln bekannt, welche für die Beschickung mit Stapel ausgerichtet sind welche niedriger als die übliche Höhe für die Palettierung sind und aus unterschiedlichen Steigenmodellen gebildet sind, welche mittels einem einzigen Förderband einer Reihe von Stapeleinheiten zugeführt werden welche der Anzahl der zu bearbeitenden Steigenmodelle entspricht. Die besagten bekannten Maschinen umfassen eine fotografische und mit Ultraschallsensoren ausgestattete Erhebungsstation um das Modell der herangeführten Steigen und die Höhe des von diesen gebildeten Stapels zu erkennen. Die Erkennungsstation ist mit einem eigenen Förderband ausgestattet welches, unabhängig vom Förderband für die Zufuhr zu den einzelnen Stapeleinheiten, gesteuert wird so dass die fotografischen Erhebungen und die Erhebung der Stapelhöhe bei stillstehendem Stapel erfolgen kann; diese Station ist nicht mit Lesevorrichtungen für die individuellen Codes, zB. Gray-Codes, optisch lesbarer Codes oder RFID (radio frequency identification)-Codes der gestapelten Steigen ausgestattet um, sei es die Zusammensetzung des zugeführten Stapels von Steigen des gleichen Modells, als auch die Anzahl der Steigen welche den Stapel bilden welche sich aus der Erkennung der Stapelhöhe ergibt, zu erkennen.

Die einzelnen Stapeleinheiten der besagten bekannten Maschinen weisen den Nachteil auf, dass im Bereich des Festhaltens der Steigen welche im extrem oberen Bereich, zwecks Vervollständigung des Stapels, zurückgehalten werden um in der Phase des Aufstockens mit einer Steigenanzahl, welche für das Erreichen der, für die Palettierung, vorgegebenen Höhe notwendig ist, in der Entnahmephase Störungen auftreten weil, insbesondere die unteren Klemmorgane nicht immer die letzte Steige regulär freigeben, welche somit die Tendenz hat sich schräg zu stellen wodurch sie zwischen den Führungen, bzw. zwischen einer aus dem Boden der unteren Steige vorstehenden Einrastrippe und eine der vertikalen Führungen, blockiert bleibt, weil in der besagten Festhalteposition der Steigen nicht eine, zu den vier Führungen, gleich beabstandete Position, bzw. eine zu den vertikalen Führungen berührungslose Position, gesichert wird.

Am Auslauf aus den einzelnen Stapeleinheiten ist es bekannt Führungen für das Parken von Stapel vorzusehen um Buffer-Durchlaufbereiche zu schaffen welche geeignet sind die Entnahmezeiten, mittels einem einzigen quer laufenden Förderband für die anschließende Palettierung der bereitgestellten Stapel, zu eliminieren, bzw. zu verkürzen. Zwischen den besagten Parkführungen wirkt ein darunter durch Kette oder Zahnriemen bewegter Wagen mit einem oder zwei vertikal beweglichen Schiebern welcher geeignet ist die einzelnen Stapel, auf den Führungen gleitend, vom Parkbereich auf das Förderband zu schieben welches quer zu den besagten Führungen angeordnet ist. Insbesondere die Ausführung und die Bewegung der besagten Schieber ist derart, dass die einzelnen Stapel auf den Parkführungen, zwecks Einführen des Schiebers, zueinander einen bestimmten beachtlichen Abstand einnehmen müssen so dass für das Parken einer Anzahl von Stapel welche mindestens gleich der auf einer Palette platzierbaren Stapelanzahl ist, beachtlich lange Parkbereiche erforderlich sind oder dass man sich, auf Kosten der guten rationellen Arbeitsweise der Anlage, betreffend die Palettierphase, für weniger Platz einnehmende Bereiche entscheidet.

Es ist bekannt, dass bei Maschinen welche ein einziges Förderband für die Beschickung mehrerer Bearbeitungseinheiten, insbesondere Stapeleinheiten, welche nebeneinander angeordnet sind und vom selben Band beschickt werden, verwenden, die Veränderung (Verlängerung) der Bandlänge infolge Verschleiß, insbesondere bei hohen Arbeitszyklen, Störungen, Hemmungen, bzw. Steuerprobleme betreffend die präzise störungsfreie Zuführung zu den einzelnen Stapeleinheiten, mit sich bringt.

Aus der DE 10 2019 113105 A1 ist eine Maschine zum Stapeln von kleinen Schachteln, z.B. für pharmazeutische Produkte, für die Palettierung bekannt.

Die Maschine besteht aus einer einzigen Zuführlinie, die wiederum aus einem Förderband besteht. Ferner weist sie eine Erkennungsstation, mindestens einen Ausschussförderer und eine Stapeleinheit auf, welche am Auslauf mit Führungen versehen ist. Die Maschine ist anschließend an die Führungen mit einem Abführförderer versehen. Die einzige Zuführlinie bedient die Erkennungsstation, die Stapeleinheit und das Ausschussförderband.

Das Stapeln erfolgt indem vorerst Gruppen der kleinen, nebeneinander angeordneten Schachteln über oder unter einer zweiten Gruppe von kleinen Schachteln angeordnet werden. Das Förderband bewegt die Schachteln in eine erste Richtung während ein Schieber sie in eine zweite entgegengesetzte, zur ersten parallelen, Richtung bewegt. Die gruppierten und gestapelten kleinen Schachteln werden von einem Schieber ins Innere eines zuvor vorbereiteten Kartons geschoben. Der besagte mit kleinen Schachteln gefüllte Karton wird nach seiner Verschließung von einem Scara-Roboter ergriffen um auf einer Palette abgelegt zu werden welche auf einem eigenen Förderband herangeführt wird. Die Maschine ist mit einer "Kontrollvorrichtung" ausgestattet welche vor oder nach der Stapelstation angeordnet ist, welche mit einer Auswurfeinrichtung für die Ausschussteile in Verbindung steht. Es ist nicht vorgesehen, dass die Kontrollvorrichtung unterschiedliche Modelle von kleinen Schachteln erkennt, noch ist eine spezifische Stapelung, bzw. die spezifische Stapelung unterschiedlicher Schachtelmodelle, vorgesehen. Die Maschine sieht somit nicht die Zuführung unterschiedlicher Schachtelmodelle, die Erkennung unterschiedlicher Modelle, die Sortierung der einzelnen Modelle und deren spezifische Stapelung, bzw. die Palettierung gemäß der verschiedenen Modelle, vor. Die Stapelung erfolgt durch Verlagern von gruppierten kleinen Schachteln welche zuvor nebeneinander angeordnet worden sind, wobei ein Stapel gebildet wird dessen Höhe von den Ausmaßen des Kartons bestimmt wird. Es ist nicht eine Stapelung mit Rückhaltung einer Anzahl gruppierter übereinandergeschichteter kleiner Schachteln vorgesehen welche eine Höhe einnehmen welche die für deren Verpackung erforderliche Höhe übersteigt, um anschließend die exakte Anzahl, welche für die Verpackung durch Einschieben in den Karton vorgesehen ist, entnehmen zu können; weder ist vorgesehen dass die übrigen gruppierten kleinen Schachteln in einer Stapeleinheit für die folgende Entnahme der gestapelten kleinen Schachteln zwecks der folgenden Verpackung, zurückgehalten werden.

Die Erfindung stellt sich die Aufgabe eine Maschine zum Sortieren und Stapeln von Steigen welche einzeln oder in unterschiedlicher Höhe gestapelt, von vorher angeordneten Maschinen, wie z.B. Trockenzentrifugen, zugeführt werden, der oben beschriebenen Art zu schaffen, welche mit hohen Arbeitszyklen arbeitet, wobei eine hohe Leistungsfähigkeit bei Beibehaltung einer bemerkenswerten Betriebszuverlässigkeit gesichert wird und welche dazu ausgerichtet ist, zwecks Bearbeitung einer größeren/kleineren Anzahl unterschiedlicher Steigenmodelle, modulartig erweitert/reduziert zu werden.

Die erfindungsgemäße Stapelmaschine umfasst die Merkmale des Anspruchs 1.

Erfindungsgemäß bewirkt die Anordnung der Erkennungsstation im ersten Teil des Zuführlinie und die Anwendung von Erkennungseinrichtungen fotografischer Art und mit Ultraschallsensoren welche geeignet sind die Erkennungen ohne Anhalten der zugeführten einzelnen oder gestapelten Steigen durchzuführen, dass die Haltezeiten eliminiert werden. Die Ausstattung der Erhebungsstation mit Lesevorrichtungen für die individuellen Codes (z.B. Gray Codes, optisch lesbare Codes, RFID Codes) der Steigen ermöglicht die Überprüfung der Steigenanzahl welche sich durch die Erhebung der Stapelhöhe mittels Ultraschallsensoren und die Überprüfung der Zugehörigkeit aller gestapelten Steigen zum selben Modell ergibt. Eine computerisierte Bearbeitung der fotografischen Erhebungen, der Erhebungen mittels Ultraschallsensoren und des Einlesens der individuellen Codes der Steigen, ermöglicht die präzise Zählung der gestapelten Steigen und die Erkennung eventueller Steigen welche nicht dem Modell angehören welches die Mehrheit im Stapel darstellt und steuert, im Fall der Präsenz von Steigen eines unterschiedlichen Modells oder welche bestimmte Defekte (nicht lesbare oder fehlende Codes) aufweisen, die Abzweigung des Stapels zu einem eigenen Ausschussförderband. Die besagte Abzweigung erfolgt erfindungsgemäß, ohne Anhalten des Förderbandes, durch eine quer zum Förderband wirkende Zurückhalteschranke und einem Schieber welcher ebenfalls quer wirkt um den auszusondernden Stapel auf ein Förderband zu schieben welches vor den Stapeleinheiten angeordnet ist. Der besagte Arbeitsgang erfolgt ohne dass die Zufuhrzyklen nach der besagten Abzweigung verzögert werden. Die Erfindung schließt nicht eine eventuelle Ausschuss-Abzweigung nach den Stapeleinheiten aus.

Im oberen Bereich der vertikalen Führungen der einzelnen Stapeleinheiten ist erfindungsgemäß, entsprechend der bekannten mehrfachen Backen für das Zurückhalten einer bestimmten Anzahl von Steigen welche infolge Zusammenstellen des Steigenstapels mit, für die Palettierung, geeigneter Höhe übrig bleiben, ein Zentriermechanismus vorgesehen welcher geeignet ist zu verhindern, dass die Steigen an den vertikalen Führungen anliegen um zu verhindern dass, insbesondere die an sich freie Steige welche unten an der letzten, von den Klemmbacken zurückgehaltenen, Steige anliegt, zwischen eine der Führungen und den unteren Einrastvorsprüngen der zurückgehaltenen Steige, blockiert bleibt.

Erfindungsgemäß ist der durch Kette oder Zahnriemen zwischen den Parkführungen für die, für die Palettierung vorbereiteten Stapel, in Längsrichtung bewegte Wagen mit zwei vertikal beweglichen, unter sich beabstandeten Schiebern ausgestattet, von denen jener, welche der entsprechenden Stapeleinheit zugekehrt ist, zum Verschieben des Stapels welcher die geeignete Höhe für die Palettierung hat, von der Hebevorrichtung auf die Parkführungen dient, während der zweite zwischen den, für die Palettierung vorbereiteten, zwecks Verminderung des Parkbereiches, bzw. zwecks Erhöhung der Anzahl der Stapel im Parkbereich, wenig unter sich beabstandeten Stapel, wirkt. Der zweite Schieber hat erfindungsgemäß eine geeignete Form für das Verschieben der einzelnen Stapel von den Parkführungen in den Mittelbereich auf das Abführförderband welches quer zu den besagten Führungen angeordnet ist.

Erfindungsgemäß ist ein System für die dauernde Erhebung der Verlängerung (durch Verschleiß) des Förderbandes, bzw. der Förderbänder, zwecks Sicherung einer hemmungslosen Beschickung der einzelnen Stapeleinheiten auch bei schnellen Arbeitszyklen, welche sich auf die präzise Ansteuerung des Bandes selbst und insbesondere der Rückhalteschranken und der Schieber welche die einzelnen Stapeleinheiten laden stützt, vorgesehen.

Die genannten Vorkehrungen ermöglichen die beachtliche Erhöhung der Leistung der Maschine, wobei eine hohe Betriebssicherheit, auch infolge Verschleiß (Verlängerung) des Zuführförderbandes, bzw. der Zuführförderbänder, gesichert bleibt, wobei weiters die Möglichkeit der Überprüfung der optischen Erhebungen durch Ultraschallsensoren sowie die präzise Zählung der bearbeiteten Steigen, mit der Möglichkeit der Zuordnung und der Zählung, z.B. der diversen Modelle zu den Lieferfirmen/Mietfirmen, zum Herstellungsdatum, zur Verwendungsanzahl und oder Verwendungsfrequenz.

Die Erfindung wird anschließend anhand eines, in den beigelegten Zeichnungen schematisch dargestellten, vorzuziehenden Ausführungsbeispieles einer erfindungsgemäßen Maschine zum Sortieren und Stapeln von Steigen, näher erklärt, wobei die Zeichnungen rein erklärenden, nicht begrenzenden, Zweck erfüllen.

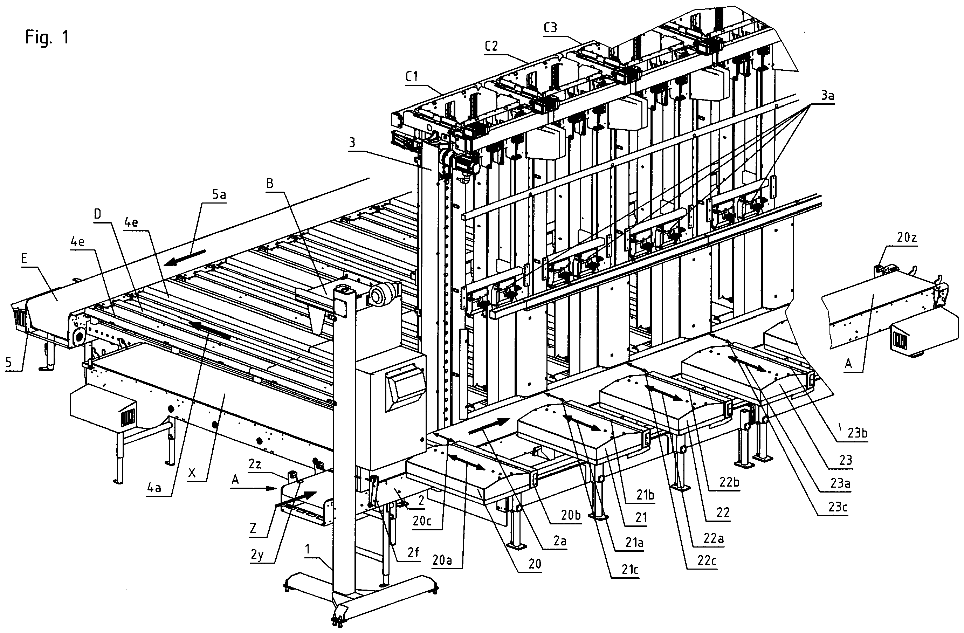

Die Fig. 1 ist eine perspektivische Darstellung einer erfindungsgemäßen Sortier- und Stapelmaschine mit drei vollständig dargestellten Stapeleinheiten und mit dem Endbereich des Zuführförderbandes in einer Position jenseits der Reihe der Stapeleinheiten.

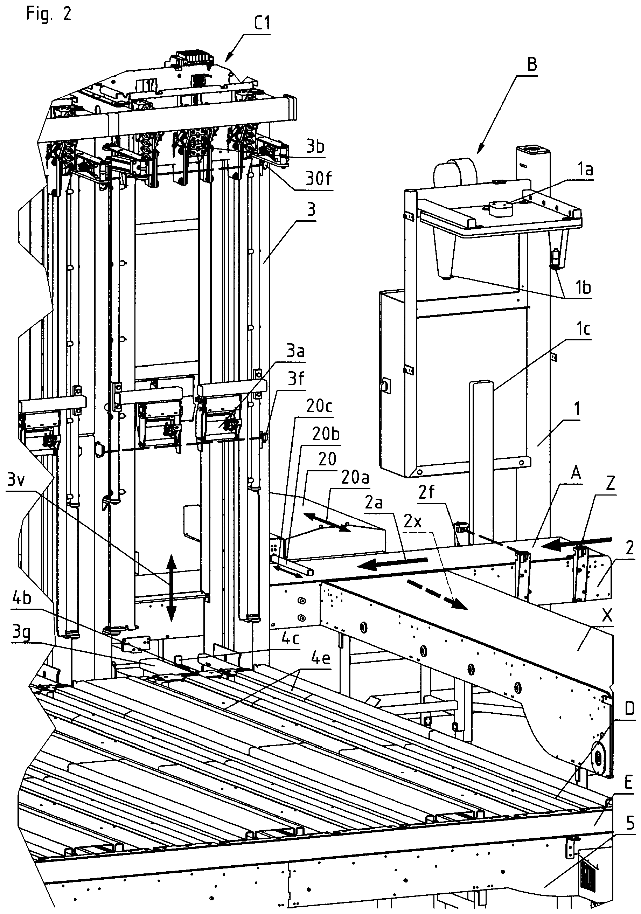

Die Fig. 2 ist eine perspektivische Darstellung einer Stapeleinheit mit Sicht auf den Auslauf für den zusammengestellten Stapel, auf die Parkführungen mit dem Anfangsbereich des Zuführförderbandes, zusammen mit der Erhebungsstation und mit dem Förderband für die Ausschussstapel oder Ausschusssteigen welche durch eine bewegliche Rückhalteschranke angehalten und quer zum Zuführförderband auf das Ausschussförderband geschoben werden.

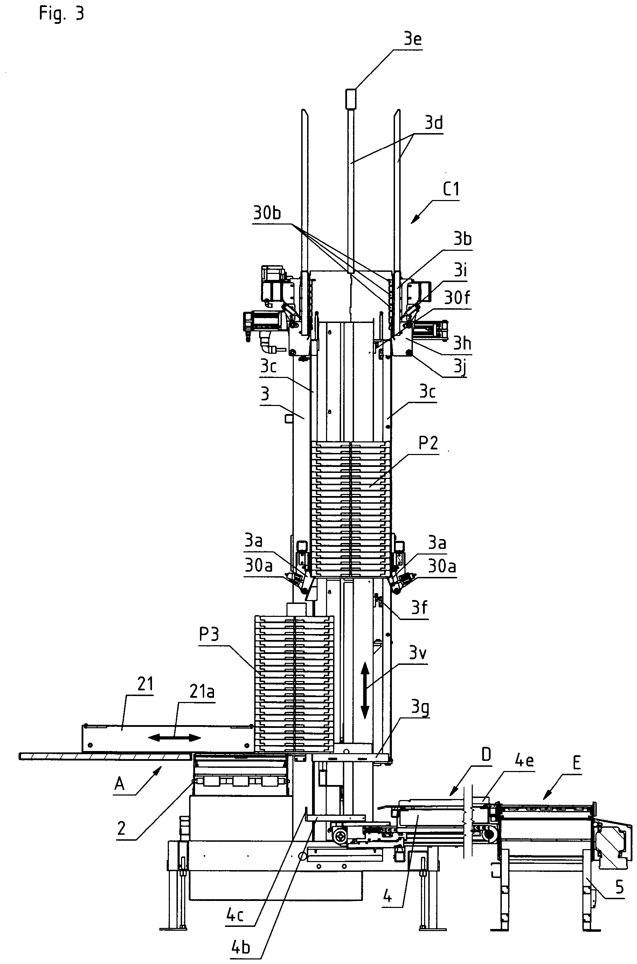

Die Fig. 3 ist eine Schnittdarstellung gemäß einer vertikalen Schnittebene durch eine in Seitenansicht gezeigte Stapeleinheit in Beladungsphase mit einem Stapel welcher durch einen Schieber vom Zuführförderband auf den Hebetisch der Stapeleinheit geschoben wird; in der selben Stapeleinheit ist mittels schwenkbarer Rückhalteelemente der zuvor geladene Steigenstapel zurückgehalten.

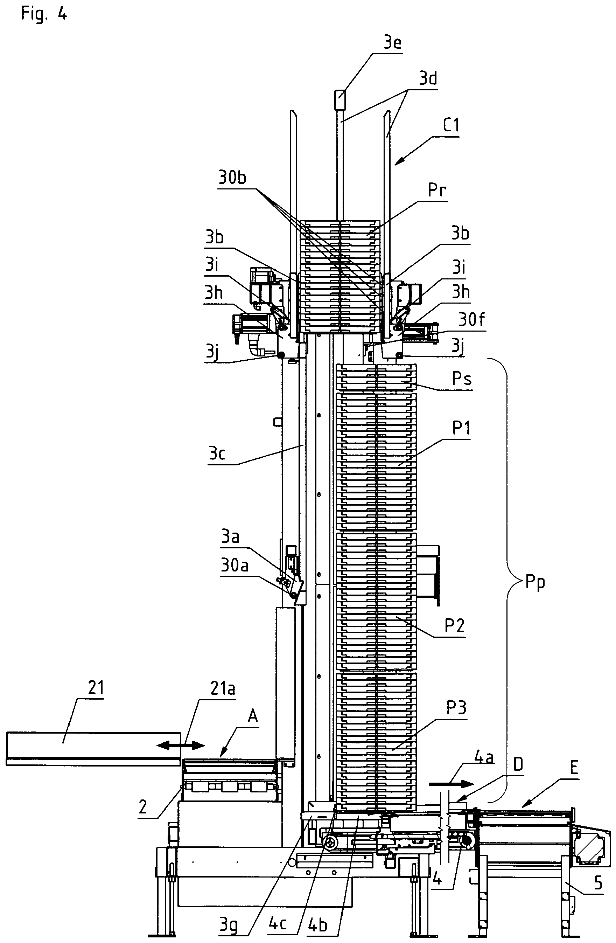

Die Fig. 4 ist eine Schnittdarstellung gemäß einer vertikalen Schnittebene durch eine in Seitenansicht gezeigte Stapeleinheit, gemäß Fig. 3, mit einem Stapel welcher eine zwecks Palettierung geeignete Höhe hat, in Auszugphase aus der Stapeleinheit in Richtung der Parkführungen mittels dem hinteren Schieber des Transferwagens; im hohen Bereich der selben Stapeleinheit wird ein Stapel überschüssiger Steigen, zwecks Hinzufügen für die Vervollständigung des nächsten Stapels, mittels Backen zurückgehalten.

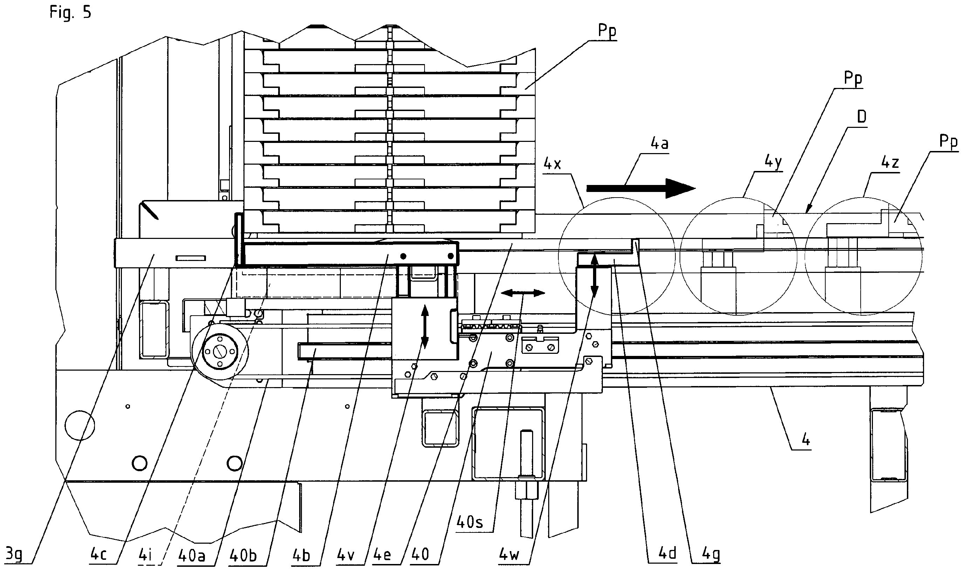

Die Fig. 5 zeigt in Seitenansicht den, zwischen den Parkführungen wirkenden Transferwagen in Entnahmephase eines Stapels vom Hebetisch einer Stapeleinheit, mittels ausgefahrenem hinteren Schieber während der vordere Schieber eine abgesenkte Position einnimmt; auf der selben Darstellung sind die teilweise angehobene Position, zwecks Einführen zwischen zwei Stapel und die maximal ausgefahrene Position, zwecks Transfer des Stapels von den Parkführungen in den Mittelbereich des Abführförderbandes, angedeutet.

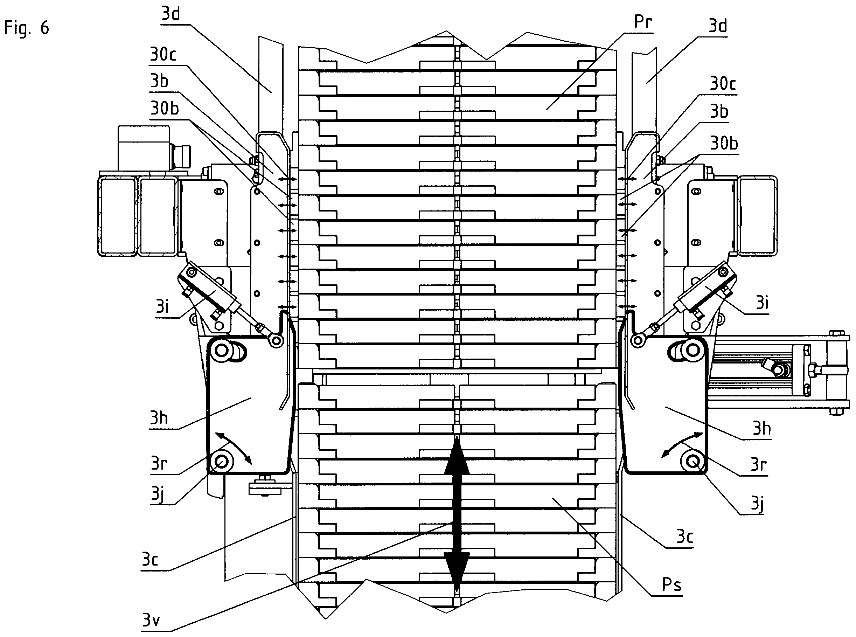

Die Fig. 6 zeigt die Seitenansicht des Bereiches der Rückhaltung mittels mehrfacher, schwenkbarer Zentrierbacken.

Das am Rahmen 2 geführte Förderband Ader Zuführlinie wird mit Stapel von Steigen beschickt Z welche, z.B. von einer Sortiermaschine oder von einer Zentrifuge herangeführt werden, dabei bilden die Steigen Stapel mit einer geringeren Höhe als der für die Palettierung erforderliche Höhe, ohne die Beschickung mit einzelnen Steigen oder mit solchen, welche sehr niedrige Stapel bilden, auszuschließen. Die besagten Stapel bestehen normalerweise bereits aus Steigen des selben Modells und sollten keinerlei Abnormitäten oder Defekte aufweisen; dies hängt allerdings von der Effizienz der vorher angeordneten Maschinen, bzw. der Erkennungs- und Kontrollstationen der besagten Maschinen, ab.

Die gestapelten Steigen welche längs der Zuführlinie A herangeführt 2a werden begegnen einer Lichtschranke 2f durch welche die Erkennungsvorrichtungen 1a, 1b, 1c der Erkennungsstation B aktiviert werden, welche auf einem Träger 1 befestigt ist und welche eine fotografische Bilderkennung 1a, zwecks Erkennung der Steigenmodelle, mindestens eine Vorrichtung mit Ultraschallsensoren 1b, zwecks Erkennung der Stapelhöhe und mindestens ein Einlesegerät 1c für die individuellen Codes der einzelnen Steigen, umfasst; alle Erkennungen erfolgen ohne das Zuführförderband A anzuhalten. Ein Datenverarbeitungsprogramm ermöglicht eine Überprüfung der erhobenen Daten und die gegenseitige Zuordnung, bzw. die Zuordnung der Daten, z.B. zum Modell, zum Hersteller, zum Lieferanten usw., sowie die Zählung insgesamt und spezifisch pro Modell, Hersteller, Lieferant.

Anschließend erreicht der Stapel den Bereich eines Schiebers 20 mit Rückhalteschranke 20b, beide werden nur betätigt wenn der soeben durch die Erkennungsstation B passierte Stapel eine Anomalie, z.B. die Präsenz von Steigen welche, bezogen auf der an der Stapeloberseite aufliegenden Steige welche der fotografischen Erkennung exponiert ist, unterschiedlichen Modellen angehören oder/und welche unleserliche individuelle Codes aufweisen. In diesem Fall wird in einem ersten Moment die Rückhalteschranke 20b ausgefahren 20c und somit der Stapel angehalten, in einem zweiten Moment wird dieser vom Schieber 20, quer zur Zuführlinie A, auf das Ausschussförderband X geschoben 20a; während dieser Arbeitsgänge läuft das Förderband der Zuführlinie A kontinuierlich. Der ausgesonderte Stapel wird auf dem Band X weiterbewegt wo er seitens eines Bediensteten überprüft wird, welcher eventuelle Steigen austauschen oder eventuelle Anomalien beseitigen kann und den Stapel in den Bearbeitungszyklus rückführen kann, oder der Stapel wird, zwecks Überprüfung und korrekter Zusammensetzung, einem spezifischen Parkbereich zugeführt.

Nach dem Ausschuss-Schieber 20 sind so viele Stapeleinheiten C1, C2, C3 vorgesehen, wie viele unterschiedliche Modelle von Steigen sortier- und stapelbar sind, wobei berücksichtigt wird dass es auch unter sich "kompatible" Modelle gibt welche eventuell in der selben Stapeleinheit gestapelt werden können. Jede der besagten Stapeleinheiten wird durch einen spezifischen, quer zum Band A beweglichen 21a, 22a, 23a, Schieber 21, 22, 23 beladen, jeder der besagten Schieber ist mit einer Rückhalteschranke 21b, 22b, 23b gekoppelt welche ebenfalls quer beweglich 21c, 22c, 23c ist.

Aufgrund der durch die Erkennungsstation B durchgeführten Erhebungen, insbesondere betreffend das Modell der Steigen wird der herangeführte 2a Stapel, bei Erreichen der entsprechenden Stapeleinheit, z.B. C1, von der entsprechenden Rückhalteschranke 21b angehalten und in die entsprechende Stapeleinheit C1 geschoben 21a welche für das spezifische Modell der Steigen welche den Stapel bilden geeignet ist. Die besagten Rückhalte- und Schubphasen erfolgen ohne Anhalten des Bandes der Zuführlinie A. Nur im Fall dass die Steigenstapel oder einzelnen Steigen auf der Zuführlinie A unter sich wenig beabstandet sind oder wenn der, nach dem in Beladungsphase der Stapeleinheit befindlichen Stapel oder Steige, folgenden Stapel oder die folgende Steige in die selbe Stapeleinheit geladen werden muss, wird das Band der Zuführlinie A, während der Beladung der Stapeleinheit, zwecks Vermeidung einer Kollision, angehalten. Der Abstand zwischen den Stapeln oder einzelnen zugeführten 2a Steigen wird durch die Lichtschranke erkannt.

Jede der Stapeleinheiten C1, C2, C3 besteht aus einem Rahmen 3 mit vertikalen Führungen für einen vertikal beweglichen 3v Aufzug 3g. Im Bereich mittlerer Höhe sind, um einen Zapfen 3a schwenkbare, Rückhaltelemente 3a vorgesehen um einen vorher geladenen Steigenstapel P2 zurückzuhalten. Der Steigenstapel welcher in die Stapeleinheit C1 geschoben 21a worden ist, wird vom Aufzug 3g angehoben 3v; sobald die Stapeloberseite des angehobenen Stapels eine Lichtschranke 3f unterbricht wird die effektive Höhe des Stapels gelesen welche dem Abstand zwischen der Position der Auflagefläche des Aufzuges 3g und der Position der Lichtschranke 3f entspricht. In einem Bereich oberhalb der Lichtschranke 3f sind Klemmeinrichtungen 3b mit mehreren bewegliche 30c Klemmbacken 30b, zwecks Rückhaltung zwischen den vertikalen Führungen 3d einer bestimmten Steigenanzahl Pr vorgesehen welche sich, beim vorhergehenden Zusammenstellen eines Stapels Pp mit einer für die Palettierung geeigneten Höhe, als überschüssig ergibt. Die besagten Klemmvorrichtungen 3b sind mit einer Zentriervorrichtung ausgestattet welche aus, am Zapfen 3j schwenkbaren 3r Backen 3h bestehen und durch Pneumatikzylinder 3i bewegt werden wobei erreicht wird dass der, zwischen den vertikalen Führungen 3d, zurückgehaltene Stapel Pr, bezogen auf die darunter angeordneten Führungen 3c, eine zentrale Position einnimmt, wobei vermieden wird, dass die Steigen welche den oberen Teil Ps des zusammengesetzten, palettierbaren Stapels Pp bilden, während der Entnahme beim Fall nach unten, nicht an den besagten Führungen 3c reiben. Die besagten Zentrierbacken 3h dienen somit dafür dass, insbesondere die letzte der, bei Entnahme infolge Rückzug 30c der Klemmbacken 30b, nach unten fallenden Steigen, eine Hemmposition einnehmen kann weil sie einseitig mit den Führungen 3c in Berührung steht und an der anderen Seite von den, unterhalb der oberen, von den Klemmbacken 30b zurückgehaltenen Steige vorstehenden Einrastrippen zurückgehalten wird. Die besagten Zentrierbacken 3h dienen somit um zu verhindern dass, insbesondere während der Entnahme die letzte der nach unten fallenden Steigen, nach Rückzug 30c der Klemmbacken 30b, eine Hemmposition einnehmen kann, weil sie an einer Seite mit den Führungen 3c in Berührung steht und an der gegenüberliegenden Seite von den unteren Einrastvorsprüngen der oberen, von den Klemmbacken 30b zurückgehaltenen Steige, zurückgehalten werden kann.

Zwecks Erhebung der exakten Höhe der Summe der Stapel P1, P2, P3, Ps, Pr welche sich in der Stapeleinheit befinden, schiebt 3v der Aufzug 3g die gesamte Ladung, vor der Bestimmung der für den palettierbaren Stapel gewünschten Höhe, zwecks Minimierung der Fehler bei der Bestimmung der Höhe, gegen einen feststehenden Anschlagbalken 3e welcher an den oberen Enden der Führungen 3d befestigt ist. Aufgrund der erhobenen Gesamthöhe der Last, bewegt 3v sich der Aufzug 3g um ein Maß nach unten welches dem Abstand zwischen der Auflagefläche des Aufzugs 3g und der Position der untersten Klemmbalken 3b entspricht, diese Distanz entspricht der, für die Palettierung erforderliche Stapelhöhe. Nach dem Zusammensetzen des Stapels Pp mit geeigneter Höhe für die Palettierung, bestehend aus drei Stapel P1, P2, P3 und aus einigen Steigen Ps welche aus einer "Reserve" von Steigen entnommen wurden welche über den Klemmvorrichtungen 3b zwischen den vertikalen Führungen 3d zurückgehalten wurden, fährt der Aufzug 3g in eine den Parkführungen 4e entsprechende Position. Um einerseits die Stapel Pp welche die geeignete Höhe für die nachfolgende Palettierung haben aus den Stapeleinheiten C1, C2, C3 entnehmen zu können und anderseits den einfachen und effizienten Transfer der Stapel Pp, welche unter sich minimal beabstandet sind, auf den Parkführungen 4e, sowie den Transfer 4a in den Mittelbereich des Abführförderbandes E, ohne Kollisionsrisiko mit diesem durchzuführen, schlägt die Erfindung einen Transferwagen 40b vor welcher, sei es mit dem Aufzug 3g der einzelnen Stapeleinheiten, als auch mit dem Abführförderband zusammenwirkt. Für diesen Zweck ist der besagte Wagen 4b wesentlich mit einem hinteren Arm 4d versehen welcher in drei Positionen 4x, 4y, 4z unterschiedlicher Höhe vertikal bewegt 4w werden kann.

Nachdem der Aufzug 3g die, den Parkführungen 4e entsprechende Position eingenommen hat nimmt der Transferwagen 40, welcher längs einer Führung 40b von einer Kette oder einem Zahnriemen 40a bewegt 40s wird, eine Position unter dem Aufzug 4g ein, wobei er einen hinteren Arm 4b, welcher am Ende mit einem Auflagevorsprung 4c versehen ist, hebt 4v und den Stapel Pp vom Aufzug 3g auf die Parkführungen 4e und entlang dieser in Richtung Abführförderband E schiebt 4a, dabei wird auf den selben Führungen 4e mindestens jene Anzahl von Stapeln Pp vorbereitet welche für die vollständige Beladung einer Palette benötigt werden. Während des Transfers 4a des Stapels Pp bewegt sich dieser, bei Entnahme aus der Stapeleinheit unter einer Lichtschranke 30f hindurch welche, im Fall deren Unterbrechung, z.B. wegen übermäßiger Höhe des Stapels Pp, die Transferbewegung 4a blockiert. Die besagten Stapel Pp werden auf den Parkführungen 4e zueinander so nahe positioniert, dass anschließend gerade noch der Mitnehmervorsprung 4g des vorderen Arms 4d zwischen den besagten geparkten Stapeln Pp eindringen kann um diese anschließend einzeln auf das Abführförderband E mit Rahmen 5 schieben 4d zu können. Der besagte vordere Arm 4d mit Mitnehmervorsprung 4g kann drei Positionen 4x, 4y, 4z einnehmen, eine vollständig zurückgezogene 4x, eine Einführposition 4y zwischen den geparkten Stapeln Pp und eine maximal ausgefahrene Position 4z zwecks Transfer der einzelnen Stapel Pp von den Parkführungen 4e in den Mittelbereich des Abführförderbandes E, ohne mit diesem zu interferieren.

Das Band oder die Bänder der Zuführlinie A sind erfindungsgemäß mit zwei unter sich beabstandeten Referenzmarken 2y, 20y versehen welche von zwei entsprechenden Erkennungsstationen 2z, 20z, z.B. optischer oder magnetischer Art, erkannt werden mittels welcher, zusammen mit der Erhebung der Drehzahl des Antriebsmotors des selben Förderbandes, die durch Verschleiß verursachte Verlängerung des Bandes berechnet werden kann. Unter Berücksichtigung der Verlängerung das Zuführförderbandes ist dauerhaft eine präzise Ansteuerung der Bewegungen des Bandes der Zuführlinie A, der Betätigung der Rückhalteschranken 20b, 21b, 22b, 23b und der entsprechenden Schieber 20, 21, 22, 23 sichergestellt, wobei die Beladungszeiten der einzelnen Stapeleinheiten C1, C2, C3 optimiert werden, Störungen betreffend das Eingreifen der Antriebszahnräder am Förderband ausgeschlossen werden und eine hohe Betriebssicherheit, auch bei sehr schnellen Arbeitszyklen der Maschine, garantiert wird.

## Patentansprüche

1. Maschine zum Stapeln von Steigen mit klappbaren Seitenwänden um Stapel zusammenzustellen welche eine für die Palettierung geeignete Höhe aufweisen, bestehend aus einer einzigen Zuführlinie (A) bestehend aus einem oder mehreren Förderbändern, aus einer Erkennungsstation (B), aus mindestens einem Ausschussförderband (X), aus mindestens zwei Stapeleinheiten (C1, C2, C3) welche im oberen Bereich mit einer, mit Klemmbacken (30b) ausgestatteten Klemmvorrichtung (3b) versehen sind und am Auslauf mit Parkführungen (4e) und, anschließend an die besagten Führungen, mit einem gemeinsamen Abführförderband (E) versehen sind, wobei die einzige Zuführlinie (A) die Erkennungsstation (B), alle Stapeleinheiten (C1, C2, C3) und das Ausschussförderband bedient, wobei für den Transfer der von der Zuführlinie (A) zum Ausschussförderband (X), bzw. zu den Stapeleinheiten (C1, C2, C3), zugeführten (2a) Stapel oder einzelnen Steigen, Rückhalteschranken (20b, 21b, 22b, 23b) und anschließend Schieber (20, 21, 22, 23) quer zur Zuführlinie (A) wirken (20a, 21a, 22a, 23a) und wobei die Bewegung (2a) des Bandes oder der Bänder der Zuführlinie (A) während der Arbeitsphasen der Erhebungsstation (B), während der Rückhaltewirkung der Schranken (20c, 21c, 22c, 23c) sowie während der Wirkung der Schieber (20, 21, 22, 23) nicht unterbrochen wird, während sie für die Dauer der Rückhaltung und des Transfers eines Stapels oder einer einzelnen Steige in die entsprechende Stapeleinheit, ausschließlich wenn der, von einer Lichtschranke (2f) im Bereich der Erkennungsstation (B), erhobene Abstand zum nachfolgenden Stapel oder zur nachfolgenden Steige minimal ist, unterbrochen wird.

2. Maschine gemäß Anspruch 1, **dadurch gekennzeichnet, dass** die Erkennungsstation (B) mit einer Kamera für optische Erhebungen (1a), mit mindestens einem Einlesegerät (1c) für die individuellen Codes, welche seitlich an den Böden der einzelnen Steigen, bzw. an den gestapelten Steigen, vorgesehen sind, welche auf der Zuführlinie (A) herangeführt (2a) werden, und mit Ultraschallsensoren (1b), zwecks Erhebung der Höhe der zugeführten Stapel, ausgestattet ist.

3. Maschine gemäß Anspruch 1, **dadurch gekennzeichnet, dass** am Band oder an den Bändern der Zuführlinie (A) mindestens eine Bezugsmarke (2y) vorgesehen ist, welche durch entsprechende zwei zueinander beabstandeten Erhebungsstationen (2z, 20z) einlesbar sind und dass am Antrieb des selben Bandes ein Drehzahlmesser vorgesehen ist, dass aus den von den Erhebungsstationen (2z, 20z) beim Durchlauf der Erkennungsmarke (2y) eingelesenen Daten, in Verbindung mit der Drehzahl welche beim Durchlauf der Erkennungsmarke von einer Erkennungsstation (2z) bis zur nächsten Erkennungsstation (20z) gemessen wird, die Verlängerung durch Verschleiß des Bandes, bzw. der Bänder der Zuführlinie (A) berechenbar ist und dass für die Ansteuerung der Rückhalteschranken (20b, 21b, 22b, 23b) und der Schieber (20, 21, 22, 23) der, aufgrund der besagten Erhebungen berechnete, Wert der Verlängerung berücksichtigt wird.

4. Maschine gemäß Anspruch 1, **dadurch gekennzeichnet, dass** an den Stapeleinheiten (C1, C2, C3) im oberen Bereich der, mit Klemmbacken (30b) ausgestatteten, Klemmvorrichtungen (3b), unterhalb der untersten Klemmbacken, Zentrierbacken (3h) vorgesehen sind welche an Zapfen (3j) schwenkbar (3r) gelagert sind, welche geeignet sind die den Stapel (Pr) bildenden Steigen, welche mindestens teilweise für die folgende Zusammensetzung des für die Palettierung geeigneten Stapels (Pp) zurückgehalten werden, zu zentrieren, dabei ist die Zentrierung geeignet den seitlichen Kontakt der Steigen unmittelbar unterhalb der letzten unteren, von den Klemmbacken (30b) zurückgehaltenen, Steige mit einer der vertikalen Führungen (3c) der Stapeleinheit zu verhindern, dass unterhalb der besagten Rückhalteelemente (3a) eine Lichtschranke (3f), zwecks Erhebung der Höhe des Stapels (P3) in Beladungsphase, vorgesehen ist und dass unterhalb der Klemmvorrichtungen (3b) eine Lichtschranke (30f), zwecks Überprüfung der effektiven Höhe der für die Palettierung entnommenen Stapel (Pp), vorgesehen ist.

5. Maschine gemäß Anspruch 1, **dadurch gekennzeichnet, dass** unterhalb der Parkführungen (4e) ein Transferwagen (40) wirkt welcher mittels Kette oder Zahnriemen (40a) entlang einer Führung (40b) bewegt (40s) wird welcher mit zwei Schieber ausgestattet ist, ein hinterer welcher aus einem vertikal bewegbaren (4v) Arm (4b) besteht welcher am hinteren Ende einen Vorsprung (4c) aufweist um den zu palettierenden Stapel (Pp) vom Aufzug (3g) der Stapeleinheit (C1) auf die Parkführungen (4e) zu schieben (4e) und ein vorderer welcher aus einem Arm (4d) mit einem vertikalen Vorsprung (4g) besteht welcher vertikal in drei Positionen (4x, 4y, 4z) bewegbar (4w) ist, eine (4y) welche kaum über die obere Auflagefläche der Parkführungen (4e) ragt und eine (4z) welche so weit vorsteht, dass sie den Stapel (Pp) von den Parkschienen (4e) in eine mittlere Position auf das quer verlaufende Abführförderband (E) schieben (4a) kann, ohne mit diesem zu interferieren.

6. Maschine gemäß Anspruch 1, **dadurch gekennzeichnet, dass** die Daten der Bildverarbeitung der von mindestens einer Kamera (1a) gelieferten Bilder, zusammen mit den Daten betreffend die Höhe der zugeführten (2a) Stapel welche durch mindestens einen Ultraschallsensor (1b) erhoben werden und den Erhebungen (1c) betreffend die individuellen Codes der einzelnen, den Stapel bildenden Steigen, zwecks Vergleich der Anzahl von Steigen, welche sich aufgrund des von der Bildverarbeitung gelieferten Modells der Steigen und der Stapelhöhe, mit der Anzahl der Steigen welche sich aus dem Einlesen der individuellen Codes ergibt, von einem Programm bearbeitet werden, wobei eine exakte Zählung der Steigen aufgrund der verschiedenen Modelle, sowie die Anzeige der Gesamtsumme der bearbeiteten Steigen und die Zuordnung der bearbeiteten Steigen an die einzelnen Hersteller und/oder Lieferanten, bzw. Vermieter sowie die Anzeige der Bearbeitungsfrequenz der einzelnen Steigen, ermöglicht wird.

## Claims

1. A machine for stacking crates with foldable side walls to form stacks that have a height suitable for palletizing, said machine comprising a single feed line (A) consisting of one or more conveyor belts, an identification station (B), at least one reject conveyor belt (X), at least two stacking units (C1, C2, C3) which in the upper region are provided with a clamping device (3b) equipped with clamping jaws (30b) and at the outlet are provided with parking guides (4e) and, downstream of said guides, with a common discharge conveyor belt (E), wherein the single feed line (A) serves the identification station (B), all the stacking units (C1, C2, C3) and the reject conveyor belt, wherein, in order to transfer the stacks or individual crates fed (2a) from the feed line (A) to the reject conveyor belt (X) or to the stacking units (C1, C2, C3), retaining barriers (20b, 21b, 22b, 23b) and then pushers (20, 21, 22, 23) act (20a, 21a, 22a, 23a) transversely to the feed line (A), and wherein the movement (2a) of the belt or belts of the feed line (A) is not interrupted during the working phases of the detection station (B), during the retaining action of the barriers (20c, 21c, 22c, 23c) and during the action of the pushers (20, 21, 22, 23), whereas it is interrupted for the duration of retaining and transferring a stack or a single crate into the corresponding stacking unit only if the distance to the subsequent stack or to the subsequent crate is minimal, said distance being detected by a light barrier (2f) in the region of the identification station (B).

2. The machine according to claim 1, **characterized in that** the identification station (B) is equipped with an optical detection camera (1a), with at least one reader (1c) for the individual codes provided on the side at the bases of the individual crates, or on the stacked crates, that are being moved forward (2a) on the feed line (A), and with ultrasonic sensors (1b) for detecting the height of the fed stacks.

3. The machine according to claim 1, **characterized in that** at least one reference mark (2y) is provided on the belt or belts of the feed line (A), which reference mark(s) can be read by two corresponding detection stations (2z, 20z) located at a distance from each other, and **in that** a revolution counter is provided on the drive of the same belt, **in that** the elongation due to wear of the belt or belts of the feed line (A) can be calculated from the data read in by the detection stations (2z, 20z) as the identification mark (2y) passes, in combination with the number of revolutions measured as the identification mark passes from one identification station (2z) to the next identification station (20z), and **in that** the value of the elongation, calculated on the basis of said detections, is taken into account for actuating the retaining barriers (20b, 21b, 22b, 23b) and the pushers (20, 21, 22, 23).

4. The machine according to claim 1, **characterized in that** centring jaws (3h) are provided on the stacking units (C1, C2, C3) in the upper region of the clamping devices (3b) equipped with clamping jaws (30b), below the lowermost clamping jaws, said centring jaws being pivotably (3r) mounted on pins (3j) and being suitable for centring the crates forming the stack (Pr), at least some of which crates are held back to subsequently form the stack (Pp) suitable for palletizing, the centring being suitable to prevent the crates immediately below the last lower crate retained by the clamping jaws (30b) from coming into lateral contact with one of the vertical guides (3c) of the stacking unit, **in that** a light barrier (3f) is provided below said retaining elements (3a) in order to detect the height of the stack (P3) in the loading phase, and **in that** a light barrier (30f) is provided below the clamping devices (3b) for the purpose of checking the effective height of the stacks (Pp) withdrawn for palletizing.

5. The machine according to claim 1, **characterized in that** a transfer carriage (40) acts below the parking guides (4e), which transfer carriage is moved (40s) by means of a chain or toothed belt (40a) along a guide (40b) equipped with two pushers, namely a rear pusher consisting of a vertically movable (4v) arm (4b) which has a projection (4c) at the rear end for pushing (4e) the stack (Pp) to be palletized from the elevator (3g) of the stacking unit (C1) onto the parking guides (4e), and a front pusher consisting of an arm (4d) with a vertical projection (4g), which is movable (4w) vertically into three positions (4x, 4y, 4z), one (4y) barely projecting above the upper support surface of the parking guides (4e) and one (4z) projecting so far that it can push (4a) the stack (Pp) from the parking rails (4e) into a central position on the transversely extending discharge conveyor belt (E), without interfering with the latter.

6. The machine according to claim 1, **characterized in that** the data from the image processing of the images supplied by at least one camera (1a), together with the data relating to the height of the fed (2a) stacks that is detected by at least one ultrasonic sensor (1b) and the detections (1c) of the individual codes of the individual crates forming the stack, are processed by a program in order to compare the number of crates that results on the basis of the model of the crates supplied by the image processing and the stack height with the number of crates that results from reading in the individual codes, thereby making it possible to exactly count the crates on the basis of the different models, and to indicate the total sum of the processed crates, and to assign the processed crates to the individual manufacturers and/or suppliers and/or hirers, and to indicate the frequency of processing of the individual crates.

## Revendications

1. Machine pour empiler des plateaux à parois latérales rabattables pour constituer des piles d'une hauteur adaptée à la palettisation, comprenant une seule ligne d'alimentation (A) composée d'un ou plusieurs convoyeurs, d'une station de relèvement (B), d'au moins un convoyeur de rejet (X), d'au moins deux unités d'empilage (C1, C2, C3) munies dans leur partie supérieure d'un dispositif de serrage (3b) équipé de mâchoires (30b) et munies en sortie de guides de stationnement (4e) et, à la suite desdits guides, d'un convoyeur d'évacuation commun (E), l'unique ligne de ligne d'alimentation (A) alimentant la station de détection (B), toutes les unités d'empilage (C1, C2, C3) et le convoyeur de rejet, dans laquelle, pour le transfert des piles (2a) ou des plateaux individuels amenés de la ligne d'alimentation (A) au convoyeur de rejet (X), respectivement aux unités d'empilage (C1, C2, C3), des barrières de retenue (20b, 21b, 22b, 23b) et ensuite des poussoirs (20, 21, 22, 23) agissent transversalement à la ligne d'alimentation (A) (20a, 21a, 22a, 23a), et dans laquelle le mouvement (2a) du ou des convoyeurs de la ligne d'alimentation (A) pendant les phases de travail de la station de relèvement (B), pendant l'action de retenue des barrières (20c, 21c, 22c, 23c) ainsi que pendant l'action des poussoirs (20, 21, 22, 23) n'est pas interrompu, alors qu'il est interrompu pendant la durée de la retenue et du transfert d'une pile ou d'un plateau individuel dans l'unité d'empilage correspondante, exclusivement lorsque la distance par rapport à la pile ou au plateau suivant, relevée par une barrière lumineuse (2f) dans la zone du poste de détection (B), est minimale.

2. Machine selon la revendication 1, **caractérisée en ce que** la station de relèvement (B) est équipée d'une caméra pour des relevés optiques (1a), avec au moins un appareil de lecture (1c) pour les codes individuels inscrits latéralement sur les fonds de chaque plateau, respectivement sur les plateaux empilés, qui sont amenées sur la ligne d'alimentation (A), et de capteurs à ultrasons (1b) pour la détection de la hauteur des piles amenées.

3. Machine selon la revendication 1, **caractérisée en ce que** le ou les convoyeur(s) de la ligne d'alimentation (A) sont munis d'au moins une marque de référence (2y) qui est apte à être lue par deux stations de relèvement (2z, 20z) correspondantes, espacées l'une de l'autre, et **en ce qu'**un capteur de vitesse de rotation est monté sur l'entraînement du même convoyeur, et **en ce que**, à partir des données enregistrées par les stations de relèvement (2z, 20z) lors du passage de la marque de référence, en connexion avec la vitesse de rotation mesurée lors du passage de la marque de référence d'une station de relèvement (2z) jusqu'à à la station de relèvement suivante (20z), est apte à être calculé l'allongement dû à l'usure du ou des convoyeurs et **en ce que**, pour la commande des barrières de retenue (20b, 21b, 22b, 23b) et des poussoirs (20, 21, 22, 23), la valeur de l'allongement calculée sur la base desdits détections est prise en compte.

4. Machine selon la revendication 1, **caractérisée en ce que** sur les unités d'empilage (C1, C2, C3), dans la partie supérieure des dispositifs de serrage (3b) équipés de mâchoires de serrage (30b), en dessous des mâchoires de serrage les plus basses, sont prévues des mâchoires de centrage (3h) qui sont montées pivotantes (3r) sur des pivots (3j) et qui sont aptes à centrer les plateaux formant la pile (Pr) qui sont au moins partiellement retenus pour former ensuite la pile (Pp) apte à la palettisation, le centrage étant apte à éviter le contact latéral des plateaux immédiatement en dessous du dernier plateau inférieur retenu par les mâchoires de serrage (30b) avec l'un des guides verticaux (3c) de l'ensemble d'empilage, qu'une barrière lumineuse (3f) est disposée en dessous desdits éléments de retenue (3a), en vue de relever la hauteur de la pile (P3) en phase de chargement, et **en ce qu'**une barrière lumineuse (30f) est prévue sous les dispositifs de serrage (3b) en vue de vérifier la hauteur effective des piles (Pp) prélevées pour la palettisation.

5. Machine selon la revendication 1, **caractérisée en ce qu'**en dessous des guides de stationnement (4e) agit un chariot de transfert (40) qui est déplacé (40s) au moyen d'une chaîne ou d'une courroie crantée (40a) le long d'un guide (40b), lequel est équipé de deux poussoirs, dont l'un arrière est constitué d'un bras (4b) mobile verticalement (4v) qui présente à son extrémité arrière une saillie (4c) pour pousser (4e) la pile (Pp) à palettiser de l'élévateur (3g) de l'unité d'empilage (C1) sur les guides de stationnement (4e), et un avant, qui consiste en un bras (4d) avec une saillie verticale (4g) qui est mobile verticalement (4w) dans trois positions (4x, 4y, 4z), dont une (4y) qui dépasse à peine de la surface d'appui supérieure des guides de stationnement (4e) et une (4z) qui dépasse suffisamment, qu'elle puisse pousser (4a) la pile (Pp) des guides de stationnement (4e) dans une position intermédiaire sur le convoyeur d'évacuation s'étendant transversalement (E), sans interférer avec celui-ci.

6. Machine selon la revendication 1, **caractérisée en ce que** les données de traitement d'images provenant des images fournies par au moins une caméra (1a), associées aux données concernant la hauteur des piles alimentées (2a) relevées par au moins un dit capteur à ultrasons (1b) et aux relevés (1c) concernant les codes individuels de chaque plateau constituant la pile, afin de comparer le nombre de plateaux résultant du modèle des plateaux fourni par le traitement d'images et la hauteur de la pile avec le nombre de plateaux résultant de la lecture des codes individuels, sont traités par un programme, ce qui permet un comptage exact des plateaux sur la base des différents modèles, ainsi que l'affichage de la somme totale des plateaux traités et l'attribution des plateaux traités aux différents fabricants et/ou fournisseurs, respectivement loueurs, ainsi que l'affichage de la fréquence de traitement des de chaque plateau.
